# EUROPÄISCHE PATENTANMELDUNG

(11) **EP 3 560 790 A1**
(43) Veröffentlichungstag der Anmeldung: **30.10.2019**
(21) Anmeldenummer: 19164802.1
(22) Anmeldetag: 25.03.2019
(51) Int. Cl.: B61D 33/00, B61D 1/04, B60N 2/01

(54) **FAHRZEUG MIT ZUMINDEST EINER SITZGRUPPE**

(30) Priorität: 24.04.2018 DE 102018206254
(71) Anmelder: Siemens Mobility GmbH, 81739 München (DE)
(72) Erfinder: Hesterberg, Joshua, 40822 Mettmann (DE)

(57) **Zusammenfassung**

Die Erfindung betrifft ein Fahrzeug (4, 40, 42, 48, 60) mit zumindest einer Sitzgruppe (6, 47, 50), wobei die Sitzgruppe (6, 47, 50) zwei Einzelsitze (10, 12) aufweist, die in Längsrichtung (8) des Fahrzeugs (4, 40, 42, 48, 60) ausgerichtet sind.

Um ein Fahrzeug (4, 40, 42, 48, 60) mit einer Sitzgruppe (6, 47, 50) bereitzustellen, mittels welcher einem Passagier ein guter Sitzkomfort geboten werden kann, wobei gleichzeitig eine dichte Anordnung von Sitzplätzen möglich ist, wird vorgeschlagen, dass die beiden Einzelsitze (10, 12) der Sitzgruppe (6, 47, 50) in Längsrichtung (8) des Fahrzeugs (4, 40, 42, 48, 60) versetzt zueinander angeordnet sind, wobei seitlich auskragende Teile (18) der beiden Einzelsitze (10, 12) in Längsrichtung (8) des Fahrzeugs (4, 40, 42, 48, 60) hintereinander angeordnet sind.

## Beschreibung

Die Erfindung betrifft ein Fahrzeug mit zumindest einer Sitzgruppe, wobei die Sitzgruppe zwei Einzelsitze aufweist, die in Längsrichtung des Fahrzeugs ausgerichtet sind.

Es ist üblich, in einem Fahrzeug eine Sitzgruppe aus mehreren in Längsrichtung des Fahrzeugs ausgerichteten Einzelsitzen vorzusehen, wobei die Einzelsitze der Sitzgruppe unmittelbar nebeneinander angeordnet sind. Beispielsweise können die Einzelsitze, insbesondere über ihre Mittelarmlehnen, aneinander stoßen.

Beispielhaft ist ein als Zweite-Klasse-Wagen ausgebildetes Schienenfahrzeug zu nennen. In einem solchen Zweite-Klasse-Wagen sind mehrere solcher Sitzgruppen, welche jeweils genau zwei Einzelsitze aufweisen, jeweils hintereinander in zwei in Längsrichtung des Zweite-Klasse-Wagens verlaufenden Reihen angeordnet. Zwischen den beiden Reihen ist ein in Längsrichtung des Zweite-Klasse-Wagens verlaufender Gang angeordnet. Auch in einem Reisebus bzw. Überlandbus ist eine solche Anordnung von Sitzgruppen üblich.

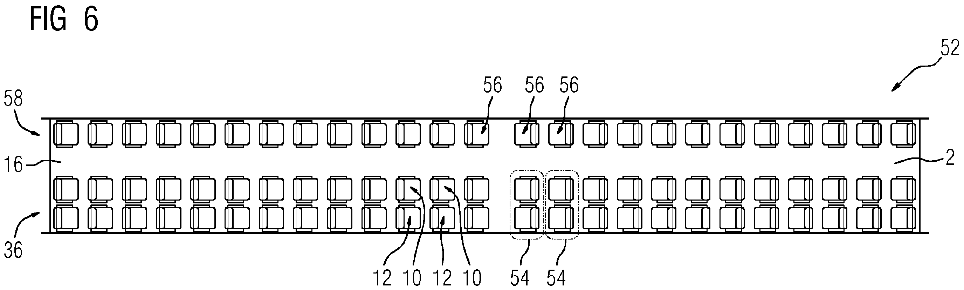

Um den Sitzkomfort zu erhöhen, ist es üblich, beispielsweise in einem als Erste-Klasse-Wagen ausgebildeten Schienenfahrzeug breitere Einzelsitze, welche meist Armlehnen aufweisen, vorzusehen. Außerdem kann für einen erhöhten Sitzkomfort ein zusätzlicher Abstand zwischen den beiden Einzelsitzen vorgesehen werden. Da die Breite des Wagens begrenzt ist und auch eine minimale Gangbreite nicht unterschritten werden soll, passen nun nicht mehr vier Einzelsitze nebeneinander. Üblicherweise sind in einem solchen Erste-Klasse-Wagen mehrere solcher Sitzgruppen, welche jeweils genau zwei Einzelsitze aufweisen, jeweils hintereinander in einer ersten in Längsrichtung des Zweite-Klasse-Wagens verlaufenden Reihe angeordnet. In der zweiten in Längsrichtung des Erste-Klasse-Wagens verlaufenden Reihe dagegen sind üblicherweise jeweils einzelne Einzelsitze hintereinander angeordnet. Eine solche Anordnung von Sitzen ist in FIG 6 beispielhaft gezeigt.

Außerdem ist im Erste-Klasse-Wagen der Abstand der Sitzgruppen sowie der Abstand der Einzelsitze in Längsrichtung des Fahrzeugs größer als im Zweite-Klasse-Wagen, um eine Beinfreiheit von Passagieren zu erhöhen.

Die genannten Maßnahmen zur Erhöhung des Sitzkomforts bewirken allerdings eine deutlich reduzierte Anzahl an Einzelsitzen pro Wagen.

Eine Aufgabe der Erfindung ist es, ein Fahrzeug mit einer Sitzgruppe bereitzustellen, mittels welcher einem Passagier ein guter Sitzkomfort geboten werden kann, wobei gleichzeitig eine dichte Anordnung von Sitzen möglich ist.

Die Aufgabe wird gelöst durch ein Fahrzeug der oben genannten Art, bei dem erfindungsgemäß die beiden Einzelsitze der Sitzgruppe in Längsrichtung des Fahrzeugs versetzt zueinander angeordnet sind, wobei seitlich auskragende Teile der beiden Einzelsitze in Längsrichtung des Fahrzeugs hintereinander angeordnet sind.

Auf diese Weise kann eine Breite der Sitzgruppe, insbesondere gegenüber einer Sitzgruppe aus nebeneinander angeordneten Sitzen, reduziert werden. Insbesondere kann die Breite der Sitzgruppe reduziert werden, ohne eine Breite einer Sitzfläche eines jeweiligen Sitzes der Sitzgruppe zu reduzieren. Insbesondere können die Sitze der Sitzgruppe auf diese Weise näher aneinander angeordnet sein/werden.

Seitlich auskragende Teile der beiden Einzelsitze sind in Längsrichtung des Fahrzeugs hintereinander angeordnet. Auf diese Weise können die Einzelsitze ineinander eingreifen. Insbesondere kann der seitlich auskragende Teil des ersten der Einzelsitze in den zweiten Einzelsitz eingreifen. Weiter kann der seitlich auskragende Teil des zweiten Einzelsitzes in den ersten Einzelsitz eingreifen.

Sinnvollerweise sind die Einzelsitze der Sitzgruppe nicht durch einen seitlichen Abstand, insbesondere nicht durch einen Gang, getrennt.

Die Sitze der Sitzgruppe sind in Längsrichtung des Fahrzeugs ausgerichtet. D. h., dass die Ausrichtung der Sitze, kurz die Sitzausrichtungen, in Längsrichtung des Fahrzeugs zeigen. Weiter heißt das, dass jeder der Einzelsitze einen Sitzplatz in Längsrichtung des Fahrzeugs bereitstellen kann.

Sinnvollerweise umfasst die Sitzgruppe zumindest zwei Einzelsitze, nämlich die beiden zuvor genannten Einzelsitze. Die Sitzgruppe kann noch weitere Einzelsitze aufweisen. Es ist vorteilhaft, wenn die Sitzgruppe genau zwei Einzelsitze, nämlich die beiden zuvor genannten Einzelsitze, aufweist.

In einer vorteilhaften Ausgestaltung der Erfindung umfassen die seitlich auskragenden Teile der beiden Einzelsitze, welche zweckmäßigerweise in Längsrichtung des Fahrzeugs hintereinander angeordnet sind, jeweils eine Mittelarmlehne.

Als Mittelarmlehne des ersten Einzelsitzes der Sitzgruppe kann eine Armlehne aufgefasst werden, welche auf derjenigen Seite des ersten Einzelsitzes angeordnet ist, welche zu dem zweiten Einzelsitz der Sitzgruppe zeigt. Weiter kann als Mittelarmlehne des zweiten Einzelsitzes der Sitzgruppe eine Armlehne aufgefasst werden, welche auf derjenigen Seite des zweiten Einzelsitzes angeordnet ist, welche zu dem ersten Einzelsitz der Sitzgruppe zeigt.

Vorzugsweise sind die Mittelarmlehnen der beiden Einzelsitze miteinander verbunden. Die Mittelarmlehnen der beiden Einzelsitze können fest, insbesondere trennbar oder untrennbar, miteinander verbunden sein. Insbesondere können die Mittelarmlehnen der beiden Einzelsitze einteilig, insbesondere als eine gemeinsame Mittelarmlehne, ausgebildet sein.

Außerdem können die seitlich auskragenden Teile der beiden Einzelsitze, welche in Längsrichtung des Fahrzeugs hintereinander angeordnet sind, jeweils ein Sichtschutzelement umfassen.

Die Sitzschutzelemente der beiden Einzelsitze sind vorzugsweise miteinander verbunden. Die Sitzschutzelemente der beiden Einzelsitze können fest, insbesondere trennbar oder untrennbar, miteinander verbunden sein. Insbesondere können die Sitzschutzelemente der beiden Einzelsitze einteilig, insbesondere als ein gemeinsames Sitzschutzelement, ausgebildet sein.

Zweckmäßigerweise sind die beiden Einzelsitze der Sitzgruppe um ein nicht unterschreitbares Mindestmaß in Längsrichtung des Fahrzeugs versetzt zueinander angeordnet.

Es ist vorteilhaft, wenn die beiden Einzelsitze der Sitzgruppe um mindestens 20 cm, insbesondere um mindestens 25 cm, besonders bevorzugt um mindestens 30 cm, in Längsrichtung des Fahrzeugs versetzt zueinander angeordnet sind.

Weiter ist es bevorzugt, wenn die beiden Einzelsitze der Sitzgruppe um maximal 40 cm, insbesondere um maximal 35 cm, besonders bevorzugt um maximal 30 cm, in Längsrichtung des Fahrzeug versetzt zueinander angeordnet sind.

Ein Maß, um welches die Einzelsitze der Sitzgruppe in Längsrichtung des Fahrzeugs versetzt zueinander angeordnet sind, kann veränderlich sein. Beispielsweise kann zumindest einer der Einzelsitze der Sitzgruppe gegenüber dem anderen Einzelsitz der Sitzgruppe in Längsrichtung des Fahrzeugs verschiebbar sein. Zum Beispiel kann der eine Einzelsitz derart gegenüber dem anderen in Längsrichtung des Fahrzeugs verschiebbar sein, dass der Versatz in Längsrichtung des Fahrzeugs zwischen 20 cm und 40 cm einstellbar ist.

Es ist vorteilhaft, wenn die beiden Einzelsitze der Sitzgruppe um ein unveränderliches Maß in Längsrichtung des Fahrzeugs versetzt zueinander angeordnet sind. D. h., dass das Maß, um welches die Einzelsitze der Sitzgruppe in Längsrichtung des Fahrzeugs versetzt zueinander angeordnet sind, unveränderlich sein kann. Insbesondere ist es bevorzugt, wenn die Einzelsitze in Längsrichtung des Fahrzeugs nicht gegeneinander verschiebbar sind.

Prinzipiell kann die Sitzgruppe - insbesondere als Ganzes - in Längsrichtung des Fahrzeugs verschiebbar sein. Weiter ist es bevorzugt, wenn weder die Einzelsitze noch die Sitzgruppe als Ganzes in Längsrichtung des Fahrzeugs verschiebbar ist.

Das unveränderliche Maß kann beispielsweise 20 cm, 25 cm, 30 cm, 35 cm oder 40 cm betragen.

Es ist vorteilhaft, wenn das unveränderliche Maß 30 cm, insbesondere 300 mm, beträgt. D. h., dass vorteilhafterweise die beiden Einzelsitze der Sitzgruppe um 30 cm, insbesondere um 300 mm, in Längsrichtung des Fahrzeugs versetzt zueinander angeordnet sind.

Zweckmäßigerweise weist das Fahrzeug einen Gang, beispielsweise einen Mittelgang, auf. Vorzugsweise verläuft der Gang in Längsrichtung des Fahrzeugs.

Der erste Einzelsitz der Sitzgruppe kann ein gangseitiger Einzelsitz sein. Es ist vorteilhaft, wenn der erste, gangseitige Sitz in Längsrichtung des Fahrzeugs bezüglich seiner Sitzausrichtung nach vorn versetzt gegenüber dem zweiten Einzelsitz der Sitzgruppe angeordnet ist.

Weiter ist es vorteilhaft, wenn die Sitzausrichtung des zweiten Einzelsitzes in dieselbe Richtung zeigt wie die Sitzausrichtung des ersten Einzelsitzes.

Falls der erste, gangseitige Sitz in Längsrichtung des Fahrzeugs bezüglich seiner Sitzausrichtung nach vorn versetzt gegenüber dem zweiten Einzelsitz der Sitzgruppe angeordnet ist, ist vorzugsweise der zweite Einzelsitz in Längsrichtung bezüglich seiner Sitzausrichtung nach hinten versetzt gegenüber dem ersten, gangseitigen Einzelsitz angeordnet. D. h., der zweite Einzelsitz kann in Längsrichtung bezüglich seiner Sitzausrichtung nach hinten versetzt gegenüber dem ersten, gangseitigen Einzelsitz angeordnet sein.

Alternativ kann der erste, gangseitige Sitz in der Längsrichtung des Fahrzeugs bezüglich seiner Sitzausrichtung nach hinten versetzt gegenüber dem zweiten Einzelsitz der Sitzgruppe angeordnet sein. D. h., dass der zweite Einzelsitz in Längsrichtung bezüglich seiner Sitzausrichtung nach vorn versetzt gegenüber dem ersten, gangseitigen Einzelsitz angeordnet sein kann.

Weiter ist es möglich, dass die Sitzausrichtung des zweiten Einzelsitzes in eine entgegengesetzte Richtung zeigt wie die Sitzausrichtung des ersten Einzelsitzes. Es ist bevorzugt, wenn in diesem Fall die beiden Einzelsitze in Längsrichtung des Fahrzeugs bezüglich ihrer Sitzausrichtung gegeneinander jeweils nach vorn versetzt angeordnet sind. D. h., sowohl der erste Einzelsitz als auch der zweite Einzelsitz kann, insbesondere in Längsrichtung des Fahrzeugs, bezüglich seiner jeweiligen Sitzausrichtung jeweils nach vorn versetzt angeordnet sein.

Der zweite Einzelsitz der Sitzgruppe kann beispielsweise ein fensterseitiger Einzelsitz sein.

In einer vorteilhaften Ausgestaltung der Erfindung umfasst das Fahrzeug mehrere solcher Sitzgruppen.

Mit anderen Worten:
Vorteilhafterweise umfasst das Fahrzeug mehrere Sitzgruppen, wobei jede der Sitzgruppen vorzugsweise jeweils zwei Einzelsitze aufweist, die vorzugsweise jeweils in Längsrichtung des Fahrzeugs ausgerichtet sind. Zweckmäßigerweise sind die beiden Einzelsitze einer jeweiligen Sitzgruppe in Längsrichtung des Fahrzeugs versetzt zueinander angeordnet, wobei vorteilhafterweise seitlich auskragende Teile der beiden Einzelsitze einer jeweiligen Sitzgruppe in Längsrichtung des Fahrzeugs hintereinander angeordnet sind.

Es ist bevorzugt, wenn die mehreren Sitzgruppen in zumindest einer in Längsrichtung des Fahrzeugs verlaufenden Reihe jeweils hintereinander angeordnet sind.

Jede der mehreren Sitzgruppen kann jeweils genau zwei Einzelsitze aufweisen. Weiter können die mehreren Sitzgruppen in genau zwei in Längsrichtung des Fahrzeugs verlaufenden Reihen, insbesondere jeweils hintereinander, angeordnet sein.

Auf diese Weise können in dem Fahrzeug besonders viele Sitzplätze bereitgestellt werden.

Beispielsweise kann zwischen den Reihen ein in Längsrichtung des Fahrzeugs verlaufender Gang, insbesondere der zuvor genannte Gang, angeordnet sein.

Das Fahrzeug kann beispielsweise als Bus ausgeführt sein.

Vorzugsweise ist das Fahrzeug als Schienenfahrzeug ausgeführt.

Es ist vorteilhaft, wenn zumindest ein Teil der mehreren Sitzgruppen in Längsrichtung des Fahrzeugs hintereinander im Abstand von mindestens 110 cm angeordnet ist. Weiter ist es bevorzugt, wenn zumindest ein Teil der mehreren Sitzgruppen in Längsrichtung des Fahrzeugs hintereinander im Abstand von maximal 120 cm angeordnet ist.

Beispielsweise kann zumindest ein Teil der mehreren Sitzgruppen in Längsrichtung des Fahrzeugs hintereinander im Abstand von 1156 mm angeordnet sein. Weiter kann zumindest ein Teil der mehreren Sitzgruppen in Längsrichtung des Fahrzeugs hintereinander im Abstand von 1106 mm angeordnet sein.

Auf diese Weise können die Sitzgruppen - insbesondere im Schienenfahrzeug - besonders günstig angeordnet sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Fahrzeug kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: einen Innenraum eines Fahrzeugs mit mehreren Sitzgruppen,
- FIG 2: ein Schienenfahrzeug mit den mehreren Sitzgruppen aus FIG 1,
- FIG 3: ein anderes Schienenfahrzeug mit den mehreren Sitzgruppen aus FIG 1,
- FIG 4: einen Innenraum eines Fahrzeugs mit mehreren weiteren Sitzgruppen,
- FIG 5: einen Innenraum eines Fahrzeugs mit mehreren anderen Sitzgruppen und
- FIG 6: ein Schienenfahrzeug mit mehreren Sitzgruppen nach dem bisherigen Stand der Technik.

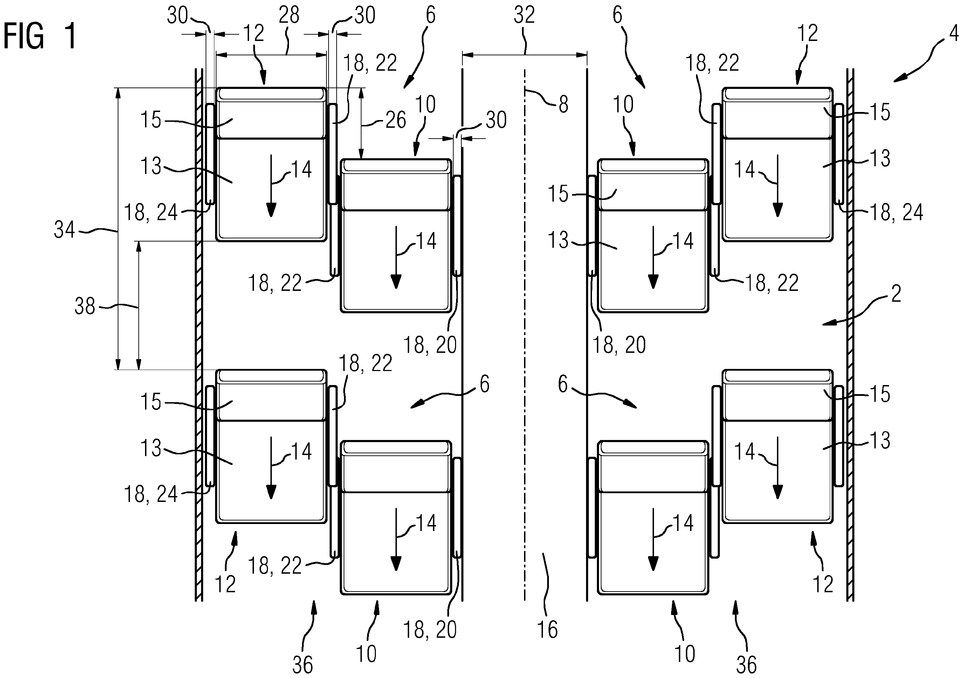

FIG 1 zeigt einen Innenraum 2 eines Fahrzeugs 4 mit mehreren Sitzgruppen 6. Das Fahrzeug 4 kann beispielsweise ein Bus oder ein Schienenfahrzeug sein. Das Fahrzeug 4 weist eine Längsrichtung 8 auf, welche als eine gestrichelte Linie 8 dargestellt ist.

Jede der Sitzgruppen 6 weist jeweils zwei Einzelsitze 10, 12 auf, die jeweils in Längsrichtung 8 des Fahrzeugs 4 ausgerichtet sind. Die jeweilige Ausrichtung 14 der Einzelsitze 10, 12, auch Sitzausrichtung 14 genannt, ist in FIG 1 jeweils als Pfeil 14 dargestellt.

Jeder der Einzelsitze 10, 12 umfasst jeweils ein Sitzflächenelement 13 und eine Rückenlehne 15. Die jeweilige Sitzausrichtung 14 eines jeweiligen Einzelsitzes 10, 12 wird jeweils durch die Anordnung der Rückenlehne 15 in Bezug zum Sitzflächenelement 13 und/oder im Bezug zum Einzelsitz 10, 12 selbst bestimmt. Ein Einzelsitz 10, 12 ist üblicherweise derart ausgerichtet, dass die Rückenlehne 15 am hinteren Ende des Einzelsitzes 10, 12, insbesondere am hinteren Ende des Sitzflächenelements 13, angeordnet ist.

Einer besseren Übersichtlichkeit halber sind einige Bezugszeichen nicht für alle jeweils gleichartigen Elemente eingezeichnet.

Die beiden Einzelsitze 10, 12 einer jeweiligen Sitzgruppe 6 sind in Längsrichtung 8 des Fahrzeugs 4 versetzt zueinander angeordnet.

Das Fahrzeug weist einen Gang 16 auf, welcher hier als ein Mittelgang ausgebildet ist. Der Gang 16 verläuft in Längsrichtung 8 des Fahrzeugs 4.

Der erste Einzelsitz 10 einer jeweiligen Sitzgruppe 6 ist jeweils ein gangseitiger Einzelsitz 10. Weiter ist der zweite Einzelsitz 12 einer jeweiligen Sitzgruppe 6 jeweils ein fensterseitiger Einzelsitz 12.

In diesem Ausführungsbeispiel zeigt die Sitzausrichtung 14 des zweiten, fensterseitigen Einzelsitzes 12 einer jeweiligen Sitzgruppe 6 in dieselbe Richtung wie die Sitzausrichtung 14 des ersten Einzelsitzes 10 derselben Sitzgruppe 6.

Der erste, gangseitige Einzelsitz 10 einer jeweiligen Sitzgruppe 6 ist in Längsrichtung 8 des Fahrzeugs 4 bezüglich seiner Sitzausrichtung 14 nach vorn versetzt gegenüber dem zweiten, fensterseitigen Einzelsitz 12 derselben Sitzgruppe 6 angeordnet. Weiter ist der zweite, fensterseitige Einzelsitz 12 einer jeweiligen Sitzgruppe 6 in Längsrichtung 8 des Fahrzeugs 4 bezüglich seiner Sitzausrichtung 14 nach hinten versetzt gegenüber dem ersten, gangseitigen Einzelsitz 10 derselben Sitzgruppe 6 angeordnet.

Jeder Einzelsitz 10, 12 weist zumindest ein seitlich auskragendes Teil 18 auf. In diesem Ausführungsbeispiel weist jeder Einzelsitz 10, 12 auf jeder Seite jeweils ein seitlich auskragendes Teil 18 auf. Die seitlich auskragenden Teile 18 sind als Armlehnen 20, 22, 24 ausgeführt. Der erste, gangseitige Einzelsitz 10 umfasst eine gangseitige Armlehne 20 und eine Mittelarmlehne 22. Weiter umfasst der fensterseitige Einzelsitz 12 eine Mittelarmlehne 22 und eine fensterseitige Armlehne 24.

Zumindest ein Teil der seitlich auskragenden Teile 18 der beiden Einzelsitze 10, 12 einer jeweiligen Sitzgruppe 6 sind in Längsrichtung 8 des Fahrzeugs 4 hintereinander angeordnet. In diesem Beispiel sind die Mittelarmlehnen 22 der beiden Einzelsitze 10, 12 einer jeweiligen Sitzgruppe 6 in Längsrichtung 8 des Fahrzeugs 4 hintereinander angeordnet. Die Mittelarmlehnen 22 der beiden Einzelsitze 10, 12 einer jeweiligen Sitzgruppe 6 sind in diesem Beispiel auf einem gemeinsamen Träger angeordnet.

Prinzipiell wäre es möglich, dass jeweils die beiden Mittelarmlehnen 22 einteilig, insbesondere als eine gemeinsame Mittelarmlehne, ausgebildet sind.

Prinzipiell kann jeder der Einzelsitze 10, 12 weitere auskragende Teile 18 aufweisen. Beispielsweise kann jeder der Einzelsitze 10, 12 ein Sichtschutzelement (nicht gezeigt) aufweisen. Auch die Sichtschutzelemente der beiden Einzelsitze 10, 12 einer jeweiligen Sitzgruppe 6 können in Längsrichtung 8 des Fahrzeugs 4 hintereinander angeordnet sein.

Vorzugsweise sind die Sichtschutzelemente der beiden Einzelsitze 10, 12 einer jeweiligen Sitzgruppe 6 oberhalb der Mittelarmlehnen 22 der jeweiligen Sitzgruppe angeordnet.

Die Sichtschutzelemente der beiden Einzelsitze 10, 12 einer jeweiligen Sitzgruppe 6 können miteinander verbunden sein. Insbesondere können die Sichtschutzelemente der beiden Einzelsitze 10, 12 einer jeweiligen Sitzgruppe 6 einteilig ausgeführt sein. Außerdem können die Sichtschutzelemente mit der jeweiligen Rückenlehne 15 des jeweiligen Einzelsitzes 10, 12 und/oder mit den Mittelarmlehnen 22 der Einzelsitze 10, 12 der jeweiligen Sitzgruppe 6 verbunden sein.

Vorzugsweise mindert das Sichtschutzelement eine Sicht von einem der Einzelsitze 10, 12 auf den anderen der Einzelsitze 10, 12 derselben Sitzgruppe 6.

Die beiden Einzelsitze 10, 12 einer jeweiligen Sitzgruppe 6 sind um ein vorgegebenes Maß 26 in Längsrichtung 8 des Fahrzeugs 4 versetzt zueinander angeordnet.

Das vorgegebene Maß 26 darf ein Mindestmaß von beispielsweise 20 cm nicht unterschreiten. D. h., die beiden Einzelsitze 10, 12 einer jeweiligen Sitzgruppe 6 sind um ein nicht unterschreitbares Mindestmaß in Längsrichtung 8 des Fahrzeugs 4 versetzt zueinander angeordnet.

In diesem Ausführungsbeispiel ist das vorgegebene Maß 26 ein unveränderliches Maß 26. D. h., dass in diesem Ausführungsbeispiel die beiden Einzelsitze 10, 12 der Sitzgruppe 6 um ein unveränderliches Maß 26 in Längsrichtung des Fahrzeugs versetzt zueinander angeordnet sind. Das Maß 26 ist unveränderlich, indem die Einzelsitze 10, 12 einer jeweiligen Sitzgruppe 6 nicht gegeneinander verschiebbar sind.

Das unveränderliche Maß 26 kann beispielsweise 30 cm, insbesondere 300 mm, betragen.

Prinzipiell könnten die Einzelsitze 10, 12 auch gegeneinander verschiebbar sein. Dann könnte das Maß 26 veränderlich sein.

In FIG 1 sind außerdem eine Breite 28 des jeweiligen Sitzflächenelements 13, eine Breite 30 der jeweiligen Armlehne 20, 22, 24 sowie eine Breite 32 des Gangs 16 dargestellt.

Aufgrund der hintereinander angeordneten Mittelarmlehnen 22 kann eine Breite der jeweiligen Sitzgruppe 6, insbesondere gegenüber einer Breite einer Sitzgruppe aus unmittelbar nebeneinander angeordneten Sitzen (vgl. FIG 6), reduziert werden. Dennoch, insbesondere aufgrund derselben Breite 28 der jeweiligen Sitzfläche 13 wie in FIG 6, bleibt ein hoher Sitzkomfort erhalten.

Jeweils zwei der Sitzgruppen 6 sind in Längsrichtung 8 des Fahrzeugs 4 hintereinander angeordnet. Insbesondere sind jeweils zwei der Sitzgruppen 6 in einem Abstand 34 hintereinander angeordnet.

Die jeweils zwei hintereinander angeordneten Sitzgruppen 6 bilden jeweils eine in Längsrichtung 8 des Fahrzeugs 4 verlaufende Reihe 36. Dabei bilden die Sitzgruppen 6 zwei in Längsrichtung 8 des Fahrzeugs 4 verlaufende Reihen 36. Zwischen den beiden Reihen 36 ist der Gang 16 angeordnet.

Zwischen den jeweiligen hintereinander angeordneten Einzelsitzen 10, 12 der hintereinander angeordneten Sitzgruppen 6 ergibt sich ein Freiraum 38. Dieser Freiraum 38 bietet einem Passagier eine gewisse Beinfreiheit.

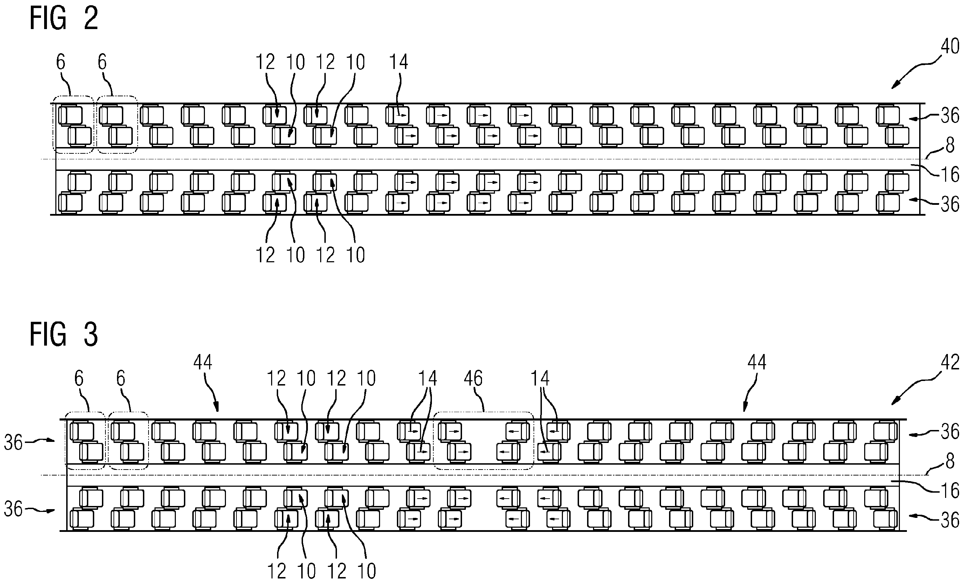

FIG 2 zeigt ein Schienenfahrzeug 40 mit den mehreren Sitzgruppen 6 aus FIG 1. Insbesondere umfasst das Schienenfahrzeug 40 eine Vielzahl solcher Sitzgruppen 6. Das Schienenfahrzeug 40 ist in diesem Beispiel als Schienenwagen ausgebildet.

Einer besseren Übersichtlichkeit halber sind die Bezugszeichen nur für einige der vielen gleichartigen Elemente eingezeichnet. Einige Breiten und Maße sind nicht in FIG 2 eingezeichnet, sondern sind FIG 1 in analoger Weise zu entnehmen.

Beispielsweise kann das Sitzflächenelement 13 eine Breite 28 von etwa 45 cm aufweisen. Außerdem kann jede der Armlehnen 20, 22, 24 eine Breite 30 von etwa 4 cm aufweisen. Weiter kann der Gang 16 beispielsweise eine Breite 32 von etwa 50 cm bis etwa 52 cm aufweisen.

Aufgrund der hintereinander angeordneten Mittelarmlehnen 22 passen zwei Sitzgruppen 6 mit jeweils zwei Einzelsitzen 10, 12 nebeneinander. Auf diese Weise passen zwei in Längsrichtung 8 des Schienenfahrzeugs 40 angeordnete Reihen 36 nebeneinander, wobei jede Reihe 36 jeweils mehrere hintereinander angeordnete Sitzgruppen 6 mit jeweils zwei Einzelsitzen 10, 12 aufweist.

In FIG 2 sind die Sitzgruppen 6 derart angeordnet, dass alle Einzelsitze 10, 12 dieselbe Sitzausrichtung 14 aufweisen. In FIG 2 zeigen die Sitzausrichtungen 14 jeweils zeichnungsgemäß nach rechts.

In jeder Reihe 36 sind die jeweiligen Sitzgruppen 6 (insbesondere in Längsrichtung 8 des Fahrzeugs 40 hintereinander im Abstand 34 von beispielsweise 1106 mm angeordnet. Zwischen den jeweiligen hintereinander angeordneten Einzelsitzen 10, 12 der hintereinander angeordneten Sitzgruppen 6 ergibt sich beispielsweise ein Freiraum 38 von 486 mm. Dieser Freiraum 38, welcher einem Passagier eine gewisse Beinfreiheit bietet, ist größer als im Stand der Technik (siehe FIG 6).

Gleichzeitig ist die Anzahl an Einzelsitzen 10, 12 ebenfalls größer als im Stand der Technik (siehe FIG 6). In diesem Beispiel umfasst das Schienenfahrzeug 40 genau 84 Einzelsitze 10, 12. Der Innenraum 2 ist beispielsweise 23 m lang.

FIG 3 zeigt ein anderes Schienenfahrzeug 42 mit den mehreren Sitzgruppen 6 aus FIG 1.

Die nachfolgende Beschreibung beschränkt sich im Wesentlichen auf die Unterschiede zum Ausführungsbeispiel aus FIG 2, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

In FIG 3 ist das Schienenfahrzeug 42 in zwei Hälften 44 geteilt, in welchen sich die Sitzgruppen 6 spiegelbildlich verhalten. In diesem Beispiel sind die Hälften 44 gleich groß. Prinzipiell können die Hälften auch verschieden groß sein.

Die Sitzgruppen 6 sind derart angeordnet, dass alle Einzelsitze 10, 12 in einer jeweiligen Hälfte 44 dieselbe Sitzausrichtung 14 aufweisen. In FIG 3 zeigen die Sitzausrichtungen 14 in der linken Hälfte 44 jeweils zeichnungsgemäß nach rechts. Außerdem zeigen die Sitzausrichtungen 14 in der rechten Hälfte 44 jeweils zeichnungsgemäß nach links. Dadurch ergibt sich an der Stelle, an der die Hälften 44 aneinanderstoßen, eine Art Vis-ä-Vis Anordnung 46 von Sitzgruppen 6 bzw. von Einzelsitzen 10, 12.

In jeder Hälfte 44 des Schienenfahrzeugs 42 sind jeweils zwei Reihen von Sitzgruppen 6 angeordnet. In jeder Reihe 36 sind die jeweiligen Sitzgruppen 6 in Längsrichtung 8 des Fahrzeugs 42 hintereinander angeordnet.

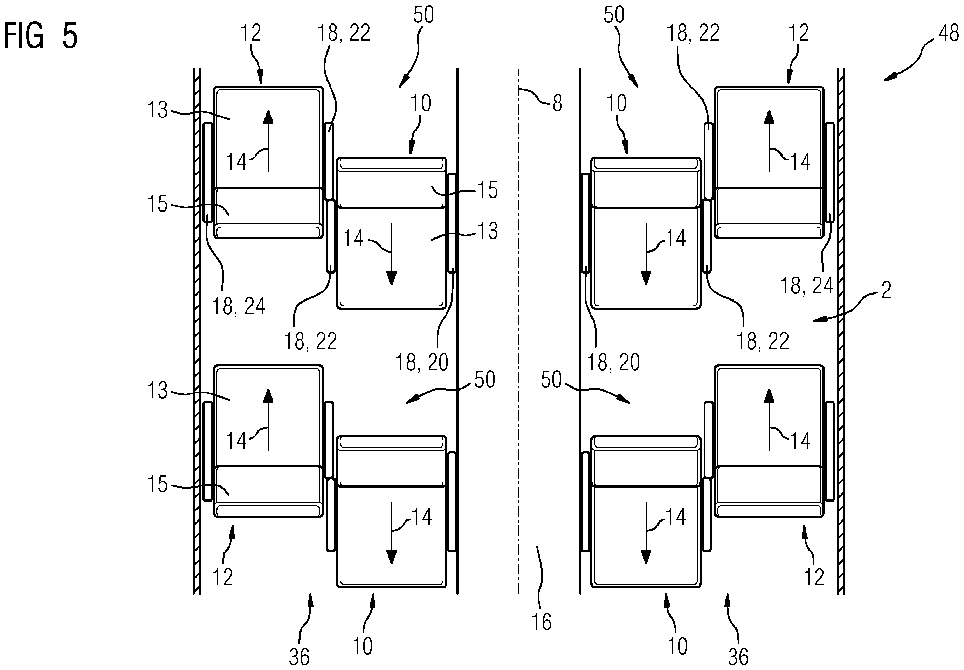

In jeder Reihe 36 sind die jeweiligen Sitzgruppen 6 (insbesondere in Längsrichtung 8 des Fahrzeugs 4 hintereinander) im Abstand 34 von beispielsweise 1156 mm angeordnet. Zwischen den jeweiligen hintereinander angeordneten Einzelsitzen 10, 12 der hintereinander angeordneten Sitzgruppen 6 ergibt sich beispielsweise ein Freiraum 38 von 536 mm. Dieser Freiraum 38, welcher einem Passagier eine gewisse Beinfreiheit bietet, ist größer als im Stand der Technik (siehe FIG 5).

Gleichzeitig ist die Anzahl an Einzelsitzen 10, 12 ebenfalls größer als im Stand der Technik (siehe FIG 5). In diesem Beispiel umfasst das Schienenfahrzeug 40 genau 80 Einzelsitze 10, 12.

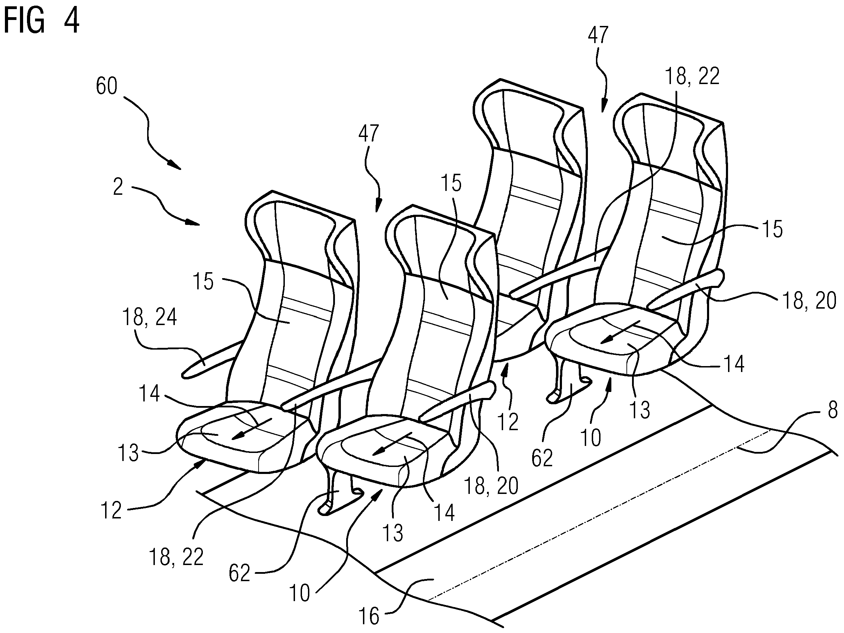

FIG 4 zeigt einen Innenraum 2 eines Fahrzeugs 60 mit mehreren anderen Sitzgruppen 47.

Die nachfolgende Beschreibung beschränkt sich im Wesentlichen auf die Unterschiede zum Ausführungsbeispiel aus FIG 1, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Jede der Sitzgruppen 47 weist jeweils zwei Einzelsitze 10, 12 auf, die jeweils in Längsrichtung 8 des Fahrzeugs 48 ausgerichtet sind und jeweils in Längsrichtung 8 des Fahrzeugs 48 versetzt zueinander angeordnet sind.

Der erste, gangseitige Sitz 10 einer jeweiligen Sitzgruppe 47 ist in Längsrichtung 8 des Fahrzeugs 60 bezüglich seiner Sitzausrichtung 14 nach hinten versetzt gegenüber dem zweiten Einzelsitz 12 derselben Sitzgruppe 6 angeordnet. Weiter ist der zweite, fensterseitige Einzelsitz 12 einer jeweiligen Sitzgruppe 47 in Längsrichtung 8 des Fahrzeugs 4 bezüglich seiner Sitzausrichtung 14 nach vorn versetzt gegenüber dem ersten, gangseitigen Einzelsitz 10 derselben Sitzgruppe 6 angeordnet.

Die beiden Mittelarmlehnen 22 einer jeweiligen Sitzgruppe 47 sind in diesem Beispiel jeweils einteilig, insbesondere als eine gemeinsame Mittelarmlehne 22, ausgebildet.

In diesem Ausführungsbeispiel sind die Einzelsitze 10, 12 einer jeweiligen Sitzgruppe 47 jeweils auf einem gemeinsamen Sitzträger 62 platziert. Die gemeinsame Mittelarmlehne 22 der jeweiligen Sitzgruppe 47 kann ebenfalls mit dem jeweiligen Sitzträger 62 verbunden sein. Weiter kann die gemeinsame Mittelarmlehne 22 mit den beiden Rückenlehnen 15 der Einzelsitze 10, 12 der jeweiligen Sitzgruppe 47 verbunden sein.

Prinzipiell könnte auch jeder der Einzelsitze 10, 12 jeweils auf einem eigenen Sitzträger platziert sein.

FIG 5 zeigt einen Innenraum 2 eines Fahrzeugs 48 mit mehreren anderen Sitzgruppen 50.

Die nachfolgende Beschreibung beschränkt sich im Wesentlichen auf die Unterschiede zum Ausführungsbeispiel aus FIG 1, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Jede der Sitzgruppen 50 weist jeweils zwei Einzelsitze 10, 12 auf, die jeweils in Längsrichtung 8 des Fahrzeugs 48 ausgerichtet sind und jeweils in Längsrichtung 8 des Fahrzeugs 48 versetzt zueinander angeordnet sind.

Die Sitzausrichtung 14 des zweiten Einzelsitzes 12 zeigt in eine entgegengesetzte Richtung wie die Sitzausrichtung 14 des ersten Einzelsitzes 10. Die beiden Einzelsitze 10, 12 sind in Längsrichtung des Fahrzeugs 48 bezüglich ihrer Sitzausrichtung 14 gegeneinander jeweils nach vorn versetzt angeordnet.

Die Mittelarmlehnen 22 der beiden Einzelsitze 10, 12 einer jeweiligen Sitzgruppe 50 sind in Längsrichtung 8 des Fahrzeugs 48 hintereinander angeordnet.

FIG 6 zeigt ein Schienenfahrzeug 52 mit mehreren Sitzgruppen 54 nach dem bisherigen Stand der Technik.

Die Sitzgruppen 54 nach dem Stand der Technik umfassen jeweils zwei in Längsrichtung 8 des Schienenfahrzeugs 52 ausgerichtete Einzelsitze 10, 12, welche jeweils unmittelbar nebeneinander angeordnet sind. Beispielsweise stoßen die Einzelsitze 10, 12, insbesondere über ihre Mittelarmlehnen 22, aneinander.

Die Sitzgruppen 54 sind jeweils hintereinander in einer ersten in Längsrichtung des Zweite-Klasse-Wagens verlaufenden Reihe 36 angeordnet. In der zweiten in Längsrichtung des Erste-Klasse-Wagens verlaufenden Reihe 58 dagegen sind jeweils einzelne Einzelsitze 56 hintereinander angeordnet.

Die Sitzflächen 13 der Sitze 10, 12, 56 sind beispielsweise 45 cm breit.

Da die Breite des Innenraums 2 begrenzt ist und auch eine minimale Gangbreite nicht unterschritten werden soll, passen nur drei Einzelsitze 10, 12 nebeneinander. Auf diese Weise passen nur 75 Sitze in das Schienenfahrzeug 52 derselben Größe wie in FIG 2 oder FIG 3. Gleichzeitig hat jeder Passagier weniger Beinfreiheit als in FIG 2 oder FIG 3.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Fahrzeug (4, 40, 42, 48, 60) mit zumindest einer Sitzgruppe (6, 47, 50), wobei die Sitzgruppe (6, 47, 50) zwei Einzelsitze (10, 12) aufweist, die in Längsrichtung (8) des Fahrzeugs (4, 40, 42, 48, 60) ausgerichtet sind,
**dadurch gekennzeichnet, dass**
die beiden Einzelsitze (10, 12) der Sitzgruppe (6, 47, 50) in Längsrichtung (8) des Fahrzeugs (4, 40, 42, 48, 60) versetzt zueinander angeordnet sind,
wobei seitlich auskragende Teile (18) der beiden Einzelsitze (10, 12) in Längsrichtung (8) des Fahrzeugs (4, 40, 42, 48, 60) hintereinander angeordnet sind.

2. Fahrzeug (4, 40, 42, 48, 60) nach Anspruch 1,
**dadurch gekennzeichnet, dass**
die seitlich auskragenden Teile (18) der beiden Einzelsitze (10, 12), welche in Längsrichtung (8) des Fahrzeugs (4, 40, 42, 48, 60) hintereinander angeordnet sind, jeweils eine Mittelarmlehne (22) umfassen.

3. Fahrzeug (4, 40, 42, 48, 60) nach Anspruch 1 oder 2,
**dadurch gekennzeichnet, dass**
die seitlich auskragenden Teile (18) der beiden Einzelsitze (10, 12), welche in Längsrichtung (8) des Fahrzeugs (4, 40, 42, 48, 60) hintereinander angeordnet sind, jeweils ein Sichtschutzelement umfassen.

4. Fahrzeug (4, 40, 42, 48, 60) nach einem der vorhergehenden Ansprüche,
**dadurch gekennzeichnet, dass**
die beiden Einzelsitze (10, 12) der Sitzgruppe (6, 47, 50) um ein nicht unterschreitbares Mindestmaß in Längsrichtung (8) des Fahrzeugs (4, 40, 42, 48, 60) versetzt zueinander angeordnet sind.

5. Fahrzeug (4, 40, 42, 48, 60) nach einem der vorhergehenden Ansprüche,
**dadurch gekennzeichnet, dass**
die beiden Einzelsitze (10, 12) der Sitzgruppe (6, 47, 50) um mindestens 20 cm, insbesondere um mindestens 25 cm, besonders bevorzugt um mindestens 30 cm, in Längsrichtung (8) des Fahrzeugs (4, 40, 42, 48, 60) versetzt zueinander angeordnet sind.

6. Fahrzeug (4, 40, 42, 48, 60) nach einem der vorhergehenden Ansprüche,
**dadurch gekennzeichnet, dass**
die beiden Einzelsitze (10, 12) der Sitzgruppe (6, 47, 50) um maximal 40 cm, insbesondere um maximal 35 cm, besonders bevorzugt um maximal 30 cm, in Längsrichtung (8) des Fahrzeugs (4, 40, 42, 48, 60) versetzt zueinander angeordnet sind.

7. Fahrzeug (4, 40, 42, 48, 60) nach einem der vorhergehenden Ansprüche,
**dadurch gekennzeichnet, dass**
die beiden Einzelsitze (10, 12) der Sitzgruppe (6, 47, 50) um ein unveränderliches Maß (26) in Längsrichtung (8) des Fahrzeugs (4, 40, 42, 48, 60) versetzt zueinander angeordnet sind.

8. Fahrzeug (4, 40, 42, 48, 60) nach einem der vorhergehenden Ansprüche,
**dadurch gekennzeichnet, dass**
das unveränderliche Maß (26) 30 cm, insbesondere 300 mm, beträgt.

9. Fahrzeug (4, 40, 42, 48) nach einem der vorhergehenden Ansprüche, welches einen Gang (16), beispielsweise einen Mittelgang, aufweist, welcher in Längsrichtung (8) des Fahrzeugs (4, 40, 42, 48) verläuft,
**dadurch gekennzeichnet, dass**
der erste Einzelsitz (10) der Sitzgruppe (6, 50) ein gangseitiger Einzelsitz (10) ist, welcher in Längsrichtung (8) des Fahrzeugs (4, 40, 42, 48) bezüglich seiner Sitzausrichtung (14) nach vorn versetzt gegenüber dem zweiten Einzelsitz (12) der Sitzgruppe (6, 50) angeordnet ist.

10. Fahrzeug (60) nach einem der Ansprüche 1 bis 8, welches einen Gang (16), beispielsweise einen Mittelgang, aufweist, welcher in Längsrichtung (8) des Fahrzeugs (60) verläuft,
**dadurch gekennzeichnet, dass**
der erste Einzelsitz (10) der Sitzgruppe (47) ein gangseitiger Einzelsitz (10) ist, welcher in Längsrichtung (8) des Fahrzeugs (60) bezüglich seiner Sitzausrichtung (14) nach hinten versetzt gegenüber dem zweiten Einzelsitz (12) der Sitzgruppe (47) angeordnet ist.

11. Fahrzeug (4, 40, 42, 60) nach Anspruch 9 oder 10,
**dadurch gekennzeichnet, dass**
die Sitzausrichtung (14) des zweiten Einzelsitzes (12) in dieselbe Richtung zeigt wie die Sitzausrichtung (14) des ersten Einzelsitzes (10).

12. Fahrzeug (4, 40, 42, 48, 60) nach einem der vorhergehenden Ansprüche,
**gekennzeichnet durch**
mehrere solcher Sitzgruppen (6, 47, 50), welche in zumindest einer in Längsrichtung (8) des Fahrzeugs (4, 40, 42, 48, 60) verlaufenden Reihe (36) jeweils hintereinander angeordnet sind.

13. Fahrzeug (4, 40, 42, 48, 60) nach Anspruch 12,
**dadurch gekennzeichnet, dass**
jede der mehreren Sitzgruppen (6, 47, 50) jeweils genau zwei Einzelsitze (10, 12) aufweist und
die mehreren Sitzgruppen (6, 47, 50) in genau zwei in Längsrichtung (8) des Fahrzeugs (4, 40, 42, 48, 60) verlaufenden Reihen (36) angeordnet sind.

14. Fahrzeug (4, 40, 42, 48, 60) nach einem der vorhergehenden Ansprüche,
welches als Schienenfahrzeug ausgeführt ist.

15. Fahrzeug (4, 40, 42, 48, 60) nach Anspruch 14 und nach Anspruch 12 oder 13,
**dadurch gekennzeichnet, dass**
zumindest ein Teil der mehreren Sitzgruppen (6, 47, 50) in Längsrichtung (8) des Fahrzeugs (4, 40, 42, 48, 60) hintereinander in einem Abstand (34) von mindestens 110 cm und maximal 120 cm angeordnet sind.
